# FASCICULE DE BREVET EUROPEEN

(11) **EP 3 105 452 B1**
(45) Date de publication et mention de la délivrance du brevet: **03.06.2020**
(21) Numéro de dépôt: 15700760.0
(22) Date de dépôt: 22.01.2015
(51) Int. Cl.: F02M 61/18, F02B 23/06

(54) **MOTEUR À COMBUSTION INTERNE À INJECTION DE DEUX NAPPES DE COMBUSTIBLE À DÉBIT DIFFÉRENCIÉ ET PROCÉDÉ D'INJECTION DE COMBUSTIBLE POUR UN TEL MOTEUR**
BRENNKRAFTMASCHINE MIT EINSPRITZUNG VON ZWEI KRAFTSTROFFSTRAHLEN BEI VERSCHIEDENEN DURCHFLUSSRATEN UND KRAFTSTOFFEINSPRITZUNG FÜR SOLCH EINE MASCHINE
INTERNAL COMBUSTION ENGINE WITH INJECTION OF TWO FUEL JETS AT DIFFERENT FLOW RATES, AND FUEL-INJECTION METHOD FOR SUCH AN ENGINE

(30) Priorité: 10.02.2014 FR 1451017
(43) Date de publication de la demande: 21.12.2016
(73) Titulaire: IFP Energies nouvelles, 92500 Rueil-Malmaison (FR)
(72) Inventeur: MARTINEZ, Lionel, F-78550 Maulette (FR); RICHARD, Stéphane, F-78550 Bazainville (FR); LAGET, Olivier, F-92500 Rueil-Malmaison (FR)
(74) Mandataire: IFP Energies nouvelles
(86) Numéro de dépôt international: PCT/EP2015/051281
(87) Numéro de publication internationale: WO 2015/117834

(56) Documents cités:
- EP-A1- 1 469 193
- EP-A1- 1 676 997
- WO-A2-2009/067495
- DE-A1-102011 017 479
- FR-A1- 2 887 586
- JP-A- H09 317 604
- US-A1- 2008 142 622

## Description

La présente invention se rapporte à un moteur à combustion à injection directe de combustible et plus particulièrement à un moteur à allumage par compression et à un procédé utilisant un tel moteur.

Elle concerne plus particulièrement un tel moteur utilisable dans le domaine aéronautique ou routier ou dans le domaine des installations stationnaires, comme un groupe électrogène.

Ce type de moteur comprend généralement au moins un cylindre, un piston comprenant un téton disposé dans un bol concave et coulissant dans ce cylindre en un mouvement rectiligne alternatif, des moyens d'admission d'un comburant, des moyens d'échappement de gaz brûlés, une chambre de combustion, et des moyens d'injection pour injecter un combustible dans la chambre de combustion.

Comme cela est généralement admis, lors de la conception d'un moteur, les contraintes de performances, d'émissions de polluants et de tenue mécanique de la chambre de combustion sont de plus en plus fortes alors que les moyens de les satisfaire sont opposés.

Ainsi l'augmentation des performances entrainent généralement une augmentation des émissions de polluants et des contraintes mécaniques plus fortes.

Pour pallier ces contraintes et de manière à garantir une émission de polluants limitée et une tenue mécanique satisfaisante sur toute la plage de fonctionnement du moteur et en particulier à très forte charge, l'utilisation de la totalité du comburant présent dans la chambre de combustion, par exemple un comburant comprenant de l'air à pression ambiante, de l'air suralimenté, ou un mélange d'air (suralimenté ou non) et de gaz brûlés recirculés, est d'une grande importance.

En effet, il est nécessaire que le mélange carburé (comburant/combustible) dans la chambre de combustion soit le plus homogène possible.

En pratique, le combustible reste confiné dans le bol et ne peut pas se mélanger au comburant situé notamment dans la chasse, c'est-à-dire dans le volume localisé dans la partie haute de la chambre de combustion délimité par la paroi du cylindre et la face de la culasse en regard du piston.

Ceci a pour inconvénients de créer des zones à fortes richesse dans la chambre de combustion engendrant une forte production de suies, d'oxyde de carbone (CO) et d'hydrocarbures imbrûlés (HC) lors de la combustion de ce mélange carburé.

De plus, la charge thermique est concentrée sur le réentrant du piston, c'est-à-dire le col ou la restriction de diamètre de bol qui marque la transition entre le bol du piston et la zone supérieure englobant la chasse, ce qui peut être limitant en termes de tenue mécanique à très fortes charges.

Pour pallier ces inconvénients, et comme cela est mieux décrit dans la demande de brevet français N° 13 60426 du demandeur, il est prévu d'utiliser un moteur à combustion interne comprenant des moyens d'injection de combustible avec des jets selon au moins deux angles de nappe et un piston comportant un bol muni d'un téton avec deux volumes de zones de combustion et une aérodynamique interne améliorant sensiblement la qualité de la combustion.

Ceci permet d'utiliser une plus grande quantité de comburant comparé aux moteurs traditionnels et de répartir la charge thermique sur une plus grande surface de la chambre de combustion.

Néanmoins, même si cette solution apporte un gain en performance, l'utilisation d'un système d'injection à double angle de nappe doit être spécifique pour injecter des quantités de combustible en rapport avec les volumes des zones de combustion.

En effet, les volumes de ces zones de combustion sont sensiblement différents et un système d'injection à double angle de nappe conventionnel va injecter une quantité identique de combustible dans chacune de ces deux zones.

De ce fait, le mélange et la richesse dans chacune des zones seront différents.

En particulier, la zone de chasse, qui présente un faible volume utile de comburant, sera trop riche par rapport à la richesse dans le fond du bol, ce qui engendre une production de suies et d'hydrocarbures imbrûlés trop importante.

Un autre exemple de moteur est donné dans le document DE 10 2011 017479 A1.

La présente invention se propose de remédier aux inconvénients mentionnés ci-dessus grâce à un moteur et à un procédé qui permettent d'obtenir un meilleur mélange entre le fluide gazeux (comburant) et le combustible injecté et un meilleur contrôle de la richesse dans la chambre de combustion grâce à l'utilisation d'un système d'injection spécifique à au moins deux angles de nappe.

A cet effet, l'invention concerne un moteur à combustion interne à injection directe à allumage par compression tel que défini à la revendication 1.

Le débit de la nappe supérieure de jets peut être inférieur à celui de la nappe inférieure de jets.

Le débit de la nappe supérieure peut être inférieur d'au moins 10% à celui de la nappe inférieure.

Le débit de la nappe supérieure peut être inférieur de 20 à 40% à celui de la nappe inférieure.

Les moyens d'injections peuvent comprendre un injecteur projetant du combustible selon au moins deux nappes de jets de combustible situées axialement l'une au-dessus de l'autre avec un angle de nappe différent l'un de l'autre.

Les moyens d'injection peuvent comporter au moins deux injecteurs projetant du combustible selon une nappe de jets de combustible d'angle de nappe différent l'un de l'autre.

Les injecteurs peuvent comporter une perméabilité différente l'un de l'autre.

L'angle de nappe de l'une des nappes peut être au plus égal à 130° alors que l'angle de nappe de l'autre des nappes peut être au moins égale à 130°.

L'invention concerne également un procédé d'injection tel que défini à la revendication 9.

Le procédé peut consister à injecter le combustible avec une différence de quantité d'au moins 10% entre les deux nappes.

Les autres caractéristiques et avantages de l'invention vont apparaître maintenant à la lecture de la description qui va suivre, donnée à titre uniquement illustratif et non limitatif, et à laquelle sont annexées :
- la figure 1 qui montre un moteur à combustion interne selon l'invention ;
- la figure 2 qui est une vue partielle à grande échelle d'une demi-section du profil du bol de piston du moteur de la figure 1 et
- la figure 3 qui illustre à plus grande échelle les moyens d'injection de combustible pour le moteur des figures 1 et 2.

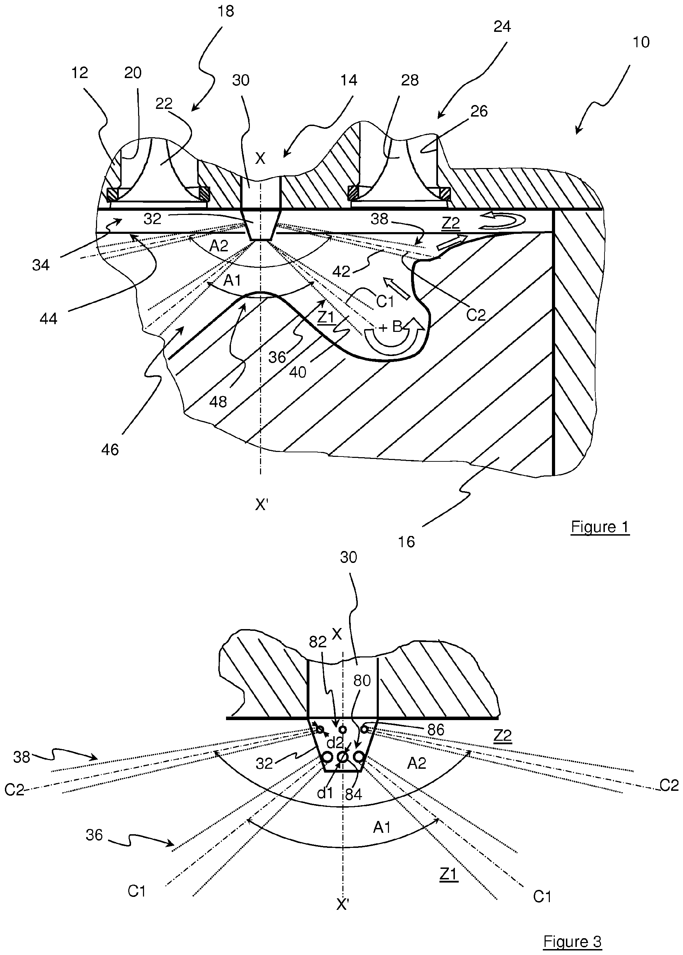

En se référant à la figure 1, un moteur à combustion interne à injection directe à allumage par compression comprend au moins un cylindre 10, une culasse 12 fermant le cylindre en partie haute, des moyens d'injection de combustible 14 portés par la culasse et un piston 16 d'axe XX' coulissant dans le cylindre en un mouvement rectiligne alternatif.

Par combustible, il est entendu un carburant liquide, comme du gazole, du kérosène ou tout autre combustible ayant les caractéristiques physico-chimiques permettant le fonctionnement d'un moteur de type allumage par compression incluant un système d'injection directe de ce combustible.

Ce moteur comprend également un moyen d'échappement 18 des gaz brûlés avec au moins une tubulure d'échappement 20 dont l'ouverture peut être contrôlée par tous moyens, comme par exemple une soupape d'échappement 22 et un moyen d'admission 24 d'un comburant avec au moins une tubulure d'admission 26 dont l'ouverture peut être contrôlée par tous moyens, comme par exemple une soupape d'admission 28.

Par le terme comburant, il est compris de l'air à pression ambiante ou de l'air suralimenté ou encore un mélange d'air (suralimenté ou non) avec des gaz brûlés.

Les moyens d'injection comprennent au moins un injecteur de combustible 30, de préférence disposé dans l'axe XX' du piston dont le nez 32 comporte une multiplicité d'orifices au travers desquels le combustible est pulvérisé et projeté en direction de la chambre de combustion 34 du moteur.

C'est à partir de ces moyens d'injection que le combustible projeté forme au moins deux nappes de jets de combustible, ici deux nappes 36 et 38 de jets de combustibles 40 et 42, qui, dans l'exemple montré, ont un axe général confondu avec celui du piston 16 tout en étant situées axialement l'une au-dessus de l'autre.

Plus précisément, la nappe 36, qui est située le plus prés du piston 16, est dénommée dans la suite de la description nappe inférieure alors que la nappe 38 placée le plus loin de ce piston est appelée nappe supérieure.

Comme visible sur la figure 1, ces deux nappes forment des angles de nappe A1 et A2 différents l'un de l'autre. Par angle de nappe, il est entendu l'angle au sommet que forme le cône issu de l'injecteur et dont la paroi périphérique fictive passe par tous les axes C1 ou C2 des jets de combustible 40 ou 42.

Avantageusement, l'angle de nappe A1 de la nappe basse est au plus égal à 130°, de préférence compris entre 40° et 130°, alors que l'angle de nappe A2 de la nappe haute est au plus égale à 180°, de préférence compris entre 150° et 180°.

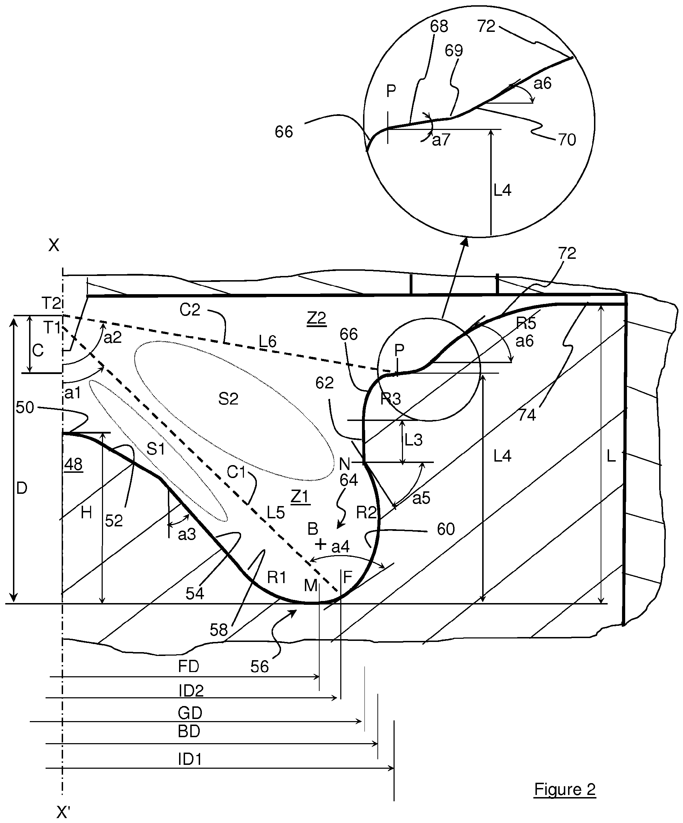

Pour des raisons de simplification dans la suite de la description l'angle a1 correspond à A1/2 alors que l'angle a2 correspond à A2/2 (Voir figure 2).

L'écart entre les deux angles de nappe est donc d'au moins 50°. Ceci permet ainsi de limiter les recouvrements de jets de combustible entres les deux nappes et donc la formation de polluants, tels que les suies.

Bien entendu, il peut être prévu que les moyens d'injection ne soient pas disposés dans l'axe XX', mais dans ce cas, l'axe général des nappes de jets de combustible issues de l'injecteur de combustible est pour le moins sensiblement parallèle à cet axe XX'.

De même, il peut être prévu que chaque nappe soit portée par un injecteur distinct (injecteur simple nappe) avec un ciblage dédié dans des zones distinctes de la chambre de combustion.

La chambre de combustion 34 est délimitée par la face interne de la culasse 12 en vis à vis du piston, la paroi interne circulaire du cylindre 10 et la face supérieure 44 du piston 16.

Cette face supérieure du piston comporte un bol concave 46, ici d'axe confondu avec celui du cylindre, dont la concavité est tournée vers la culasse et qui loge un téton 48 situé sensiblement au centre du bol, qui s'élève vers la culasse 12, en étant de préférence coaxial avec l'axe des nappes de combustible issues de l'injecteur 30.

Bien entendu, il peut être prévu que l'axe du bol ne soit pas coaxial avec celui du cylindre mais l'essentiel réside dans la disposition selon laquelle l'axe de la nappe de jets de combustible, l'axe du téton et l'axe du bol soient de préférence confondus.

En se rapportant en plus à la figure 2, le téton 48, de forme générale tronconique, comporte un sommet 50 de préférence arrondi, se poursuivant, en s'écartant symétriquement de l'axe XX' vers l'extérieur du piston 16, par une surface inclinée 52 sensiblement rectiligne se poursuivant par un flanc inclinée 54 pour arriver à un fond 56 du bol.

Bien entendu et cela sans sortir du cadre de l'invention, la surface inclinée 52 peut être inexistante (longueur nulle) et le flanc incliné 54 raccorde alors le sommet du téton au fond du bol.

Dans l'exemple de la figure 2, le fond de ce bol est arrondi avec une surface arrondie concave 58 en arc de cercle de rayon R1, dite surface arrondie interne, raccordée au bas du flanc incliné 54 et une autre surface arrondie concave 60 en arc de cercle de rayon R2, dite surface arrondie externe, raccordée par une de ses extrémités à l'extrémité basse de la surface arrondie interne à un point M et par l'autre de ses extrémités à une paroi latérale 62 sensiblement verticale à un point N.

Les deux surfaces arrondies 58 et 60 délimitent ainsi la partie basse d'un volume torique, ici un tore de section sensiblement cylindrique 64 et de centre B dont le rôle sera explicité dans la suite de la description.

La paroi latérale 62 se poursuit, toujours en s'écartant de l'axe XX', par une surface arrondie convexe 66 en arc de cercle de rayon R3, dite réentrant, aboutissant à un plan incliné 68 relié à une surface d'inflexion concave 69 raccordée à une surface sensiblement plane 70. Cette surface plane se continue par une surface convexe externe 72 en arc de cercle de rayon R5 qui arrive à une surface plane 74 s'avançant jusqu'au voisinage de la paroi du cylindre.

La chambre de combustion comprend ainsi deux zones distinctes Z1 et Z2 dans lesquelles s'effectue le mélange entre le comburant qu'elles contiennent (air - suralimenté ou non - ou mélange d'air et de gaz brûlés recirculés) et le combustible provenant de l'injecteur ainsi que la combustion du mélange carburé ainsi formé.

La zone Z1, délimitée par le téton 48, le tore 64 du fond du bol, la paroi 62 et la surface arrondie convexe 66, forme la zone basse de la chambre de combustion qui est associée à la nappe inférieure 36 de jets de combustible d'axe C1. La zone Z2, démarquée par le plan incliné 68, la surface concave 69, la surface sensiblement plane 70, la surface convexe 72, la surface plane 74, la paroi interne périphérique du cylindre et la culasse 12, constitue la zone haute de cette chambre qui est associée à la nappe supérieure 38 de jets de combustible d'axe C2.

Dans cette configuration, le bol comprend, pour une position du piston proche du point mort haut :
- un diamètre externe de fond de bol FD avec un rayon considéré entre l'axe XX' et le point M le plus bas du bol, c'est à dire à l'intersection entre les surfaces de rayons R1 et R2,
- un diamètre de l'ouverture de bol BD avec un rayon considéré au voisinage du fond du bol et correspondant à une distance prise entre l'axe XX' et le point le plus éloigné de la surface concave externe 60,
- un diamètre de col GD avec un rayon qui correspond à la distance entre l'axe XX' et la paroi verticale 62 qui délimite la section de sortie de ce bol,
- un diamètre d'injection haut ID1 avec un rayon qui correspond à la distance entre l'axe XX' et le début de la surface d'inflexion 69 au point P entre le plan incliné 68 et la surface convexe 66 en délimitant une longueur L6 des jets 38 entre l'origine T2 de l'axe C2 des jets sur l'axe du nez de l'injecteur et le point P et qui répond à la formule ID1/sin(a2),
- une longueur développée de la demi-coupe diamétrale Cb du bol, constituée par la longueur depuis l'intersection du sommet du téton avec l'axe XX' jusqu'à la paroi du cylindre,
- une hauteur H de téton entre le fond du bol au point M jusqu'au sommet du téton,
- une hauteur L du bol entre le fond du bol au point M jusqu'à la surface plane 74,
- une hauteur de jonction L3, qui correspond à l'étendu de la paroi latérale 62, considérée entre la fin de la surface arrondie externe 60 au point N et le début de la surface arrondie externe 66,
- une hauteur L4 considérée entre le point P et le point M,
- un angle d'inclinaison a3 par rapport à une verticale pour le flanc incliné 54,
- un angle d'inclinaison a4 formé par l'axe principal C1 des jets de combustible de la nappe inférieure 36 impactant le tore avec la tangente au point d'impact F en délimitant une longueur L5 des jets 40 entre l'origine T1 de l'axe C1 des jets sur l'axe du nez de l'injecteur et le point F. Cette longueur L5 répond à la formule ID2/sin(a1) avec ID2 qui correspond à un diamètre d'injection bas avec un rayon qui correspond à la distance entre l'axe XX' et le point F,
- un angle d'inclinaison a5 considéré à la tangence de la surface arrondie externe 60 avec la paroi latérale 62 au point N,
- un angle d'inclinaison a6 par rapport à l'horizontal et la tangente à la paroi sensiblement plane 70,
- un angle d'inclinaison a7 par rapport à l'horizontale et le plan incliné 68 au point d'intersection P.

Tous ces paramètres sont appréciés pour une position du piston 16 au voisinage du point mort haut qui correspond à une distance D considérée entre le point M et l'origine T2 de l'axe C2 des jets 42.

Plus précisément, cette distance D est égale à la somme de la hauteur L4 et de la hauteur C, hauteur C qui correspond à la hauteur axiale entre l'origine T2 et le point P. Cette hauteur correspond à la formule ID1/tan(a2).

Ainsi, les paramètres dimensionnels et angulaires de ce bol satisfont à au moins l'une des conditions suivantes :
- l'angle a4 est supérieur à 80°. Ceci revient à faire passer plus de la moitié du jet de combustible entre le centre B du tore 64 et le téton et plus précisément la partie basse au niveau du point M et donc d'assurer un mouvement aérodynamique dans le tore remontant vers le haut du cylindre,
- l'angle a5 doit être positif et inférieur à 90°. Préférentiellement, il doit être de l'ordre de 30° à 40° afin de diriger les jets de combustible 40 de la nappe inférieure 36 vers le volume de comburant S1 pour utiliser le comburant de cette zone tout en limitant la remontée de ce combustible vers la nappe supérieure 38,
- le volume S1 de comburant situé entre les jets 40 de combustible de la nappe inférieure est minimisé, toujours dans le souci d'optimiser l'utilisation du comburant dans la chambre,
- la position du haut du téton 48 est la plus proche possible du nez 32 de l'injecteur 30 afin de limiter le volume de comburant sous l'injecteur qui ne sera pas impacté par les jets de combustible, ce qui revient encore une fois à minimiser le volume S1. Ainsi le rapport H/L est supérieur à 40% et préférentiellement supérieur à 60%,
- l'angle a3 est sensiblement égal ou supérieur à l'angle a1 de la nappe inférieure (-10°<a3-a1<10°). Ainsi, l'axe général des jets de la nappe inférieure tangente le flanc 54 du téton. Les jets de combustible 40 de la nappe inférieure 36 peuvent ainsi interagir avec la surface arrondie 58 en se vaporisant totalement avant d'impacter le piston,
- le volume de comburant S2 entre les deux nappes est non nul puisque l'interaction entre nappes est néfaste pour les polluants. Le volume S2 doit néanmoins être minimisé. Pour se faire, la longueur de jonction L3 entre le tore et le réentrant 66 (surface arrondie convexe de rayon R3) doit être telle que L3/(2^{∗}longueur de R2)<1 ou (L3/longueur de R2<2) afin d'assurer que le volume de comburant S2 disponible entre les nappes supérieure 38 et inférieure 36 est faible par rapport au volume de combustible généré par les jets de la nappe inférieure,
- la deuxième zone de combustion Z2 située dans la partie haute du piston qui débute à partir du réentrant 66 est destinée aux jets de combustible 42 de la nappe supérieure 38,
- le volume de combustion de la zone Z2 est au moins égal au dixième du volume total du bol,
- la zone, dite de chasse, est formée par le plan incliné 68, la surface concave 69, la surface plane 70, la surface convexe 72 et la surface plane 74. L'angle a6 est compris entre 10° et 75°, ce qui permet d'éclater les jets de combustible 42 pour créer un mouvement aérodynamique au-dessus du piston et additionnellement d'aller utiliser le comburant dans la zone de chasse. Cet aérodynamique permet un meilleur mélange combustible/comburant au-dessus du piston, notamment pendant la détente et favoriser ainsi l'oxydation des gaz brûlés,
- pour favoriser la répartition du combustible issu des jets 42 dans la chasse, une surface 68 de guidage est prévue entre le réentrant 66 et la surface 70. Cette surface de guidage peut être arrondie en prolongement du réentrant ou sensiblement plane. Cette surface de guidage sert à concentrer les jets de combustible 42 et à les guider vers la surface convexe 72. Ainsi cette surface de guidage a un angle a7 au point d'intersection P dont l'écart avec l'angle de nappe a2 est de moins de 45°,
- l'emplacement de la surface d'inflexion 69 est tel que les distances L5 et L6 sont approximativement du même ordre (0.5<L5/L6<2). Ainsi, avantageusement les jets de combustible impacteront sensiblement en même temps le piston dans respectivement le tore et la zone d'inflexion.
- le diamètre ID1 doit être tel que ID1/GD>1 et ID1<(GD+ (Cb-GD)^{∗}2/3). Ceci permet aux jets de combustible 42 d'optimiser l'aérodynamique au-dessus du piston.

De plus,
- le rapport BD/L est inférieur à 6, préférentiellement inférieur à 4,
- le rapport R2/R1 est inférieur à 1, préférentiellement inférieur à 0.6,
- le rapport FD/BD est inférieur à 1,
- le rapport Cb/BD est inférieur à 2 pour conserver une vaporisation complète du combustible et éviter le mouillage de la paroi du cylindre,
- le rapport GD/BD est compris entre 0.7 et 1 pour l'aérodynamique du tore et la remontée des jets de combustible,
- le rapport H/L est supérieur à 40%, préférentiellement supérieur à 60% pour minimiser le volume de comburant entre le nez de l'injecteur et le téton,
- le rapport L5/L6 est compris entre 0.5 et 2 pour l'impact des deux nappes au même moment,
- A1 est compris entre 40° et 130° avec a1 =A1/2,
- A2 est compris entre 130° et 180° avec a2=A2/2,
- a3 est sensiblement égal à a1,
- a4 est supérieur à 80°,
- a5 est compris entre 0° et 90°, de préférence sensiblement de 30° à 40°,
- l'angle a6 est compris entre 15° et 75°,
- a7-a2 est inférieur à 45°,
- le rapport ID1/GD est supérieur à 1,
- ID1 est inférieur à (GD+(Cb-GD)^{∗}2/3).

Ainsi, grâce à ce paramétrage du bol, les jets de combustible de la nappe inférieure 36 ciblent directement le tore 64 et n'impactent pas directement le réentrant 66.

De ce fait, la combustion du mélange combustible/comburant inférieur se déroule essentiellement dans le volume du tore alors que la combustion du mélange combustible/comburant supérieur se déroule essentiellement dans la chasse et au-dessus du piston.

De plus, l'interaction des jets de la nappe supérieure avec les jets de la nappe inférieure est limitée, ce qui permet d'homogénéiser le mélange comburant/combustible tout en respectant des contraintes de tenue mécanique à forte charge.

On se rapporte maintenant à la figure 3 qui illustre un exemple des moyens d'injection de combustible dans la chambre de combustion avec un débit de combustible différencié pour chacune des nappes 36 et 38.

Ces moyens sont formés par un injecteur de combustible 30 qui porte au niveau de son nez 32 au moins deux séries 80, 82 d'orifices radiaux 84, 86 d'injection de combustible placées sensiblement parallèle l'une à l'autre. Les orifices sont disposés circonférentiellement sur le nez et les séries sont placées l'une au-dessus de l'autre. L'une 80 des séries comporte des orifices 84 de diamètre d1 au travers desquels le combustible est injecté en formant la nappe inférieure de jets 36 d'axe C1 pour la zone de mélange Z1. L'autre 82 des séries comporte des orifices 86 de diamètre d2 pour l'injection de combustible formant la nappe supérieure 38 de jets d'axe C2 pour la zone de mélange Z2.

Avantageusement, le diamètre d2 des orifices 86 est plus petit que le diamètre d1 des orifices 84. Comme la pression d'injection est identique dans la région du nez de l'injecteur, ceci a pour effet de réaliser deux nappes de jets de combustible avec des débits différents. Plus précisément, la nappe supérieure 38 a un débit inférieur à celui de la nappe inférieure 36.

De manière préférentielle, le débit de la nappe supérieure est inférieur d'au moins 10% à celui de la nappe supérieure et idéalement de 20 à 40%.

L'avantage d'une telle disposition est que la vitesse d'injection théorique est identique pour chaque rangée d'orifices ce qui permet aux jets de combustible des deux nappes d'impacter sensiblement en même temps la surface du piston.

Ainsi, l'utilisation d'une injection de combustible à débit différencié sur chacune des nappes permet d'ajuster la quantité de combustible au volume de la zone de combustion associée et ainsi améliore la qualité de la combustion.

De plus, un écart minimum de 10% de perméabilité entre les nappes permet d'obtenir une combustion procurant un maximum de puissance au moteur tout en améliorant la qualité de la combustion, ce qui diminue, à la source, les émissions d'hydrocarbures imbrûlés et de particules de suies.

Il est à noter que le rapport entre les débits injectés dépend du débit total de combustible à injecter et du nombre de trous souhaités pour l'injecteur, ainsi que du rapport de volume entre les deux zones de mélange.

A titre uniquement d'exemple, pour un diamètre d1 d'orifices 84 de 150 microns pour former la nappe inférieure 36 et un diamètre de trou d2 d'orifices 86 de 130 microns pour la nappe supérieure 38, l'écart de débit et donc de masse (ou de quantité) de combustible injectée est d'environ 25%.

Bien entendu et cela sans sortie du cadre de l'invention, il peut être prévu que chaque nappe soit portée par un injecteur distinct (injecteur simple nappe) avec un ciblage dédié dans les zones distinctes Z1 et Z2 de la chambre de combustion.

Dans cette configuration, l'un des injecteurs a un angle de nappe et une perméabilité (débit statique sous une pression donnée) différente de l'autre injecteur ou les deux injecteurs ont un angle de nappe différents et une même perméabilité mais avec une pression d'injection différente pour chaque injecteur.

## Revendications

1. Moteur à combustion interne à injection directe à allumage par compression comprenant au moins un cylindre (10), une culasse (12) portant des moyens d'injection de combustible (14), un piston (16) coulissant dans ce cylindre, une chambre de combustion (34) délimitée sur un côté par la face supérieure (44) du piston comportant un téton (48) s'érigeant en direction de la culasse et disposé au centre d'un bol concave (46) avec au moins une première et une deuxième zone de mélange (Z1, Z2), lesdits moyens d'injection projetant du combustible dans la chambre de combustion (34) selon au moins deux nappes (36, 38) de jets de combustible d'angles de nappe différents (A1, A2), une nappe inférieure (36) d'axe de jet C1 pour la zone (Z1) et une nappe supérieure (38) d'axe de jet C2 pour la zone (Z2),
dans lequel les moyens d'injection (14) introduisent du combustible dans la chambre de combustion avec un débit différencié pour chacune des nappes pour un ciblage dédié dans les première et deuxième zones de mélange distinctes (Z1, Z2) de ladite chambre de combustion, ladite première zone (Z1) étant délimitée par le téton (48), un tore (64) du fond dudit bol concave, une paroi latérale sensiblement verticale (62) et une surface arrondie convexe (66), ladite deuxième zone (Z2) étant démarquée par un plan incliné (68), une surface concave (69), une surface sensiblement plane (70), une surface convexe (72), une surface plane (74), une paroi interne périphérique du cylindre et la culasse (12), ledit fond du bol concave étant arrondi avec une première surface arrondie concave (58) en arc de cercle (R1) et avec une deuxième surface arrondie concave (60) en arc de cercle (R2), ladite première surface arrondie concave (58) étant raccordée à un bas de flanc incliné (54), ladite deuxième surface arrondie concave (60) étant raccordée par une de ses extrémités à l'extrémité basse de la première surface arrondie (58) à un premier point (M) et par l'autre de ses extrémités à la paroi latérale sensiblement verticale (62) à un deuxième point (N), **caractérisé en ce que** ladite paroi latérale sensiblement verticale (62) se poursuive par ladite surface arrondie convexe (66) en arc de cercle (R3) aboutissant audit plan incliné (68) relié à ladite surface d'inflexion concave (69), raccordée à ladite surface sensiblement plane (70),
**en ce que** ladite surface sensiblement plane (70) continue par ladite surface convexe externe (72) en arc de cercle (R5) et arrive à ladite surface plane (74), et **en ce que** ladite surface plane (74) s'avance jusqu'au voisinage de la paroi dudit cylindre (10).

2. Moteur à combustion interne selon la revendication 1, **caractérisé en ce que** le débit de la nappe supérieure (38) de jets est inférieur à celui de la nappe inférieure (36) de jets.

3. Moteur à combustion interne selon la revendication 1 ou 2, **caractérisé en ce que** le débit de la nappe supérieure (38) est inférieur d'au moins 10% à celui de la nappe inférieure (36).

4. Moteur à combustion interne selon la revendication 3, **caractérisé en ce que** le débit de la nappe supérieure (38) est inférieur de 20 à 40% à celui de la nappe inférieure (36).

5. Moteur à combustion interne selon l'une des revendications précédentes, **caractérisé en ce que** les moyens d'injections comprennent un injecteur projetant du combustible dans la chambre de combustion (34) selon au moins deux nappes de jets de combustible (36, 38) situées axialement l'une au-dessus de l'autre avec un angle de nappe différent l'un de l'autre.

6. Moteur à combustion interne selon la revendication 1, **caractérisé en ce que** les moyens d'injection comportent au moins deux injecteurs projetant du combustible dans la chambre de combustion (34), chacun des injecteurs selon une nappe de jets de combustible, chacune des nappes ayant un angle de nappe différent l'un de l'autre.

7. Moteur à combustion interne selon la revendication 6, **caractérisé en ce que** les injecteurs comportent une perméabilité différente l'un de l'autre.

8. Moteur à combustion interne selon l'une des revendications précédentes, **caractérisé en ce que** l'angle de nappe (A1) de l'une (36) des nappes est au plus égal à 130° alors que l'angle de nappe (A2) de l'autre (38) des nappes est au moins égale à 130°.

9. Procédé d'injection pour un moteur à combustion interne à injection directe à allumage par compression comprenant au moins un cylindre (10), une culasse (12) portant des moyens d'injection de combustible (14), un piston (16) coulissant dans ce cylindre, une chambre de combustion (34) délimitée sur un côté par la face supérieure (44) du piston comportant un téton (48) s'érigeant en direction de la culasse et disposé au centre d'un bol concave (46) avec au moins une première et une deuxième zones de mélange (Z1,Z2), ledit procédé consistant à injecter le combustible selon au moins deux nappes (36,38) de jets de combustible d'angles de nappe différents (A1, A2), une nappe inférieure (36) d'axe de jet C1 pour la première zone (Z1) et une nappe supérieure (38) d'axe de jet C2 pour la deuxième zone (Z2), ledit procédé consistant à injecter, dans la chambre de combustion (34), une quantité de combustible différente pour chaque zone de mélange (Z1, Z2) par les deux nappes de jets (36, 38), ladite première zone (Z1) étant délimitée par le téton (48), un tore (64) du fond dudit bol concave, une paroi latérale sensiblement verticale (62) et une surface arrondie convexe (66), ladite deuxième zone (Z2) étant démarquée par un plan incliné (68), une surface concave (69), une surface sensiblement plane (70), une surface convexe (72), une surface plane (74), une paroi interne périphérique du cylindre et la culasse (12), ledit fond du bol concave étant arrondi avec une première surface arrondie concave (58) en arc de cercle (R1) et avec une deuxième surface arrondie concave (60) en arc de cercle (R2), ladite première surface arrondie concave (58) étant raccordée à un bas de flanc incliné (54), ladite deuxième surface arrondie concave (60) étant raccordée par une de ses extrémités à l'extrémité basse de la première surface arrondie (58) à un premier point (M) et par l'autre de ses extrémités à la paroi latérale sensiblement verticale (62) à un deuxième point (N),
**caractérisé en ce que** ladite paroi latérale sensiblement verticale (62) se poursuive par ladite surface arrondie convexe (66) en arc de cercle (R3) aboutissant audit plan incliné (68) relié à ladite surface d'inflexion concave (69), raccordée à ladite surface sensiblement plane (70),
**en ce que** ladite surface sensiblement plane (70) continue par ladite surface convexe externe (72) en arc de cercle (R5) et arrive à ladite surface plane (74),
et **en ce que** ladite surface plane (74) s'avance jusqu'au voisinage de la paroi dudit cylindre (10).

10. Procédé d'injections selon la revendication 9, **caractérisé en ce qu'**il consiste à injecter le combustible avec une différence de quantité d'au moins 10% entre les deux nappes (36, 38).

## Patentansprüche

1. Brennkraftmaschine mit direkter Einspritzung und Kompressionszündung, die mindestens Folgendes beinhaltet: einen Zylinder (10), einen Zylinderkopf (12), der Mittel zum Einspritzen von Kraftstoff (14) trägt, einen Kolben (16), der in diesem Zylinder gleitet, eine Brennkammer (34), die auf einer Seite durch die obere Fläche (44) des Kolbens begrenzt wird, welcher eine Kuppe (48) umfasst, die sich in Richtung des Zylinderkopfes erhebt und in der Mitte einer konkaven Mulde (46) mit mindestens einem ersten und einem zweiten Mischbereich (Z1, Z2) angeordnet ist, wobei die Einspritzmittel entlang mindestens zwei Bahnen (36, 38) von Kraftstoffstrahlen mit unterschiedlichen Bahnwinkeln (A1, A2) Kraftstoff in die Brennkammer (34) schleudern, mit einer unteren Bahn (36) einer Strahlachse C1 für den Bereich (Z1) und einer oberen Bahn (38) einer Strahlachse C2 für den Bereich (Z2),
wobei die Einspritzmittel (14) Kraftstoff mit verschiedenen Durchflussraten für jede der Bahnen in die Brennkammer einführen, um den gesonderten ersten und zweiten Mischbereich (Z1, Z2) der Brennkammer gezielt zu beaufschlagen, wobei der erste Bereich (Z1) durch die Kuppe (48), einen Torus (64) des Bodens der konkaven Mulde, eine im Wesentlichen vertikale Seitenwand (62) und eine konvexe abgerundete Oberfläche (66) begrenzt wird, wobei der zweite Bereich (Z2) durch eine Schräge (68), eine konkave Oberfläche (69), eine im Wesentlichen ebene Oberfläche (70), eine konvexe Oberfläche (72), eine ebene Oberfläche (74), eine umlaufende Innenwand des Zylinders und den Zylinderkopf (12) abgegrenzt wird, wobei der Boden der konkaven Mulde mit einer ersten konkaven abgerundeten Oberfläche (58) in Kreisbogenform (R1) und mit einer zweiten konkaven abgerundeten Oberfläche (60) in Kreisbogenform (R2) abgerundet ist, wobei die erste konkave abgerundete Oberfläche (58) an einen unteren Teil einer geneigten Flanke (54) angeschlossen ist, wobei die zweite konkave abgerundete Oberfläche (60) durch eines ihrer Enden an einem ersten Punkt (M) an das untere Ende der ersten abgerundeten Oberfläche (58) und durch das andere ihrer Enden an einem zweiten Punkt (N) an die im Wesentlichen vertikale Seitenwand (62) angeschlossen ist,
**dadurch gekennzeichnet, dass** sich die im Wesentlichen vertikale Seitenwand (62) durch die konvexe abgerundete Oberfläche (66) in Kreisbogenform (R3) fortsetzt, die an der Schräge (68) mündet, die mit der Oberfläche mit konkaver Krümmung (69) verbunden ist, die an die im Wesentlichen ebene Oberfläche (70) angeschlossen ist, dass die im Wesentlichen ebene Oberfläche (70) mit der konvexen Außenoberfläche (72) in Kreisbogenform (R5) weitergeht und an der ebenen Oberfläche (74) ankommt, und dass die ebene Oberfläche (74) bis in die Nähe der Wand des Zylinders (10) vorstößt.

2. Brennkraftmaschine nach Anspruch 1, **dadurch gekennzeichnet, dass** die Durchflussrate der oberen Bahn (38) von Strahlen kleiner als die der unteren Bahn (36) von Strahlen ist.

3. Brennkraftmaschine nach Anspruch 1 oder 2, **dadurch gekennzeichnet, dass** die Durchflussrate der oberen Bahn (38) um mindestens 10 % kleiner als die der unteren Bahn (36) ist.

4. Brennkraftmaschine nach Anspruch 3, **dadurch gekennzeichnet, dass** die Durchflussrate der oberen Bahn (38) um 20 bis 40 % kleiner als die der unteren Bahn (36) ist.

5. Brennkraftmaschine nach einem der vorhergehenden Ansprüche, **dadurch gekennzeichnet, dass** die Einspritzmittel eine Einspritzvorrichtung beinhalten, die entlang mindestens zwei Bahnen von Kraftstoffstrahlen (36, 38), die sich axial übereinander befinden und unterschiedliche Bahnwinkel aufweisen, Kraftstoff in die Brennkammer (34) schleudert.

6. Brennkraftmaschine nach Anspruch 1, **dadurch gekennzeichnet, dass** die Einspritzmittel mindestens zwei Einspritzvorrichtungen beinhalten, die Kraftstoff in die Brennkammer (34) schleudern, jede der Einspritzvorrichtungen entlang einer Kraftstoffstrahlbahn, wobei jede der Bahnen einen unterschiedlichen Bahnwinkel aufweist.

7. Brennkraftmaschine nach Anspruch 6, **dadurch gekennzeichnet, dass** die Einspritzvorrichtungen unterschiedliche Permeabilitäten umfassen.

8. Brennkraftmaschine nach einem der vorhergehenden Ansprüche, **dadurch gekennzeichnet, dass** der Bahnwinkel (A1) der einen (36) der Bahnen höchstens gleich 130° ist, während der Bahnwinkel (A2) der anderen (38) der Bahnen mindestens gleich 130° ist.

9. Einspritzverfahren für eine Brennkraftmaschine mit direkter Einspritzung und Kompressionszündung, die mindestens Folgendes beinhaltet: einen Zylinder (10), einen Zylinderkopf (12), der Mittel zum Einspritzen von Kraftstoff (14) trägt, einen Kolben (16), der in diesem Zylinder gleitet, eine Brennkammer (34), die auf einer Seite durch die obere Fläche (44) des Kolbens begrenzt wird, welcher eine Kuppe (48) umfasst, die sich in Richtung des Zylinderkopfes erhebt und in der Mitte einer konkaven Mulde (46) mit mindestens einem ersten und einem zweiten Mischbereich (Z1, Z2) angeordnet ist, wobei das Verfahren darin besteht, den Kraftstoff entlang mindestens zwei Bahnen (36, 38) von Kraftstoffstrahlen mit unterschiedlichen Bahnwinkeln (A1, A2) einzuspritzen, mit einer unteren Bahn (36) einer Strahlachse C1 für den ersten Bereich (Z1) und einer oberen Bahn (38) einer Strahlachse C2 für den zweiten Bereich (Z2), wobei das Verfahren darin besteht, durch die zwei Strahlbahnen (36, 38) eine unterschiedliche Kraftstoffmenge für jeden Mischbereich (Z1, Z2) in die Brennkammer (34) einzuspritzen, wobei der erste Bereich (Z1) durch die Kuppe (48), einen Torus (64) des Bodens der konkaven Mulde, eine im Wesentlichen vertikale Seitenwand (62) und eine konvexe abgerundete Oberfläche (66) begrenzt wird, wobei der zweite Bereich (Z2) durch eine Schräge (68), eine konkave Oberfläche (69), eine im Wesentlichen ebene Oberfläche (70), eine konvexe Oberfläche (72), eine ebene Oberfläche (74), eine umlaufende Innenwand des Zylinders und den Zylinderkopf (12) abgegrenzt wird, wobei der Boden der konkaven Mulde mit einer ersten konkaven abgerundeten Oberfläche (58) in Kreisbogenform (R1) und mit einer zweiten konkaven abgerundeten Oberfläche (60) in Kreisbogenform (R2) abgerundet ist, wobei die erste konkave abgerundete Oberfläche (58) an einen unteren Teil einer geneigten Flanke (54) angeschlossen ist, wobei die zweite konkave abgerundete Oberfläche (60) durch eines ihrer Enden an einem ersten Punkt (M) an das untere Ende der ersten abgerundeten Oberfläche (58) und durch das andere ihrer Enden an einem zweiten Punkt (N) an die im Wesentlichen vertikale Seitenwand (62) angeschlossen ist,
**dadurch gekennzeichnet, dass** sich die im Wesentlichen vertikale Seitenwand (62) durch die konvexe abgerundete Oberfläche (66) in Kreisbogenform (R3) fortsetzt, die an der Schräge (68) mündet, die mit der Oberfläche mit konkaver Krümmung (69) verbunden ist, die an die im Wesentlichen ebene Oberfläche (70) angeschlossen ist, dass die im Wesentlichen ebene Oberfläche (70) mit der konvexen Außenoberfläche (72) in Kreisbogenform (R5) weitergeht und an der ebenen Oberfläche (74) ankommt, und dass die ebene Oberfläche (74) bis in die Nähe der Wand des Zylinders (10) vorstößt.

10. Einspritzverfahren nach Anspruch 9, **dadurch gekennzeichnet, dass** es darin besteht, den Kraftstoff mit einem Mengenunterschied von mindestens 10 % zwischen den zwei Bahnen (36, 38) einzuspritzen.

## Claims

1. Compression-ignition direct-injection internal combustion engine comprising at least one cylinder (10), a cylinder head (12) bearing fuel injection means (14), a piston (16) sliding in this cylinder, a combustion chamber (34) delimited on one side by the upper face (44) of the piston comprising a teat (48) rising up towards the cylinder head and positioned at the centre of a concave bowl (46) with at least a first and a second mixing zone (Z1, Z2), the said injection means spraying fuel into the combustion chamber (34) in at least two layers (36, 38) of jets of fuel with different layer angles (A1, A2), a lower layer (36) with jet axis C1 for the zone (Z1) and an upper layer (38) with jet axis C2 for the zone (Z2), in which the injection means (14) introduce fuel into the combustion chamber with a delivery rate that is differentiated for each of the layers in order to achieve dedicated targeting in the distinct first and second mixing zones (Z1, Z2) of the said combustion chamber, the said first zone (Z1) being delimited by the teat (48), a torus (64) in the bottom of the said concave bowl, a substantially vertical lateral wall (62) and a convex rounded surface (66), the said second zone (Z2) being demarcated by an inclined plane (68), a concave surface (69), a substantially planar surface (70), a convex surface (72), a planar surface (74), a peripheral internal wall of the cylinder and the cylinder head (12), the said bottom of the concave bowl being rounded with a first rounded surface (58) that is concave in the arc of a circle (R1) and with a second rounded surface (60) that is concave in the arc of a circle (R2), the said first concave rounded surface (58) being connected to the bottom of an inclined flank (54), the said second concave rounded surface (60) being connected by one of its ends to the bottom end of the first rounded surface (58) at a first point (M) and by the other of its ends to the substantially vertical lateral wall (62) at a second point (N),
**characterized in that** the said substantially vertical lateral wall (62) continues into the said rounded surface (66) that is convex in an arc of a circle (R3) ending at the same inclined plane (68) connected to the said concave surface of inflection (69) connected to the said substantially planar surface (70),
and **in that** the said substantially planar surface (70) continues into the said surface (72) that is external convex in the arc of a circle (R5) and reaches the said planar surface (74),
and **in that** the said planar surface (74) extends as far as the vicinity of the wall of the said cylinder (10).

2. Internal combustion engine according to Claim 1, **characterized in that** the delivery rate of the upper layer (38) of jets is lower than that of the lower layer (36) of jets.

3. Internal combustion engine according to Claim 1 or 2, **characterized in that** the delivery rate of the upper layer (38) is at least 10% lower than that of the lower layer (36).

4. Internal combustion engine according to Claim 3, **characterized in that** the delivery rate of the upper layer (38) is 20 to 40% lower than that of the lower layer (36).

5. Internal combustion engine according to one of the preceding claims, **characterized in that** the injection means comprise an injector spraying fuel into the combustion chamber (34) in at least two layers of jets of fuel (36, 38) which layers are situated one above the other with a layer angle that is different from one another.

6. Internal combustion engine according to Claim 1, **characterized in that** the injection means comprise at least two injectors spraying fuel into the combustion chamber (34), each of the injectors in one layer of jets of fuel, each of the layers having a layer angle that is different from one another.

7. Internal combustion engine according to Claim 6, **characterized in that** the injectors have different permeability from one another.

8. Internal combustion engine according to one of the preceding claims, **characterized in that** the layer angle (A1) of one (36) of the layers is at most equal to 130° while the layer angle (A2) of the other (38) of the layers is at least equal to 130°.

9. Injection method for a compression-ignition direct-injection internal combustion engine comprising at least one cylinder (10), a cylinder head (12) bearing fuel injection means (14), a piston (16) sliding in this cylinder, a combustion chamber (34) delimited on one side by the upper face (44) of the piston comprising a teat (48) rising up towards the cylinder head and positioned at the centre of a concave bowl (46) with at least a first and a second mixing zone (Z1, Z2), the said method consisting in injecting the fuel in at least two layers (36, 38) of jets of fuel with different layer angles (A1, A2), a lower layer (36) with jet axis C1 for the first zone (Z1) and an upper layer (38) with jet axis C2 for the second zone (Z2), the said method consisting in injecting, into the combustion chamber (34), a different quantity of fuel for each mixing zone (Z1, Z2) using the two layers of jets (36, 38), the said first zone (Z1) being delimited by the teat (48), a torus (64) in the bottom of the said concave bowl, a substantially vertical lateral wall (62) and a convex rounded surface (66), the said second zone (Z2) being demarcated by an inclined plane (68), a concave surface (69), a substantially planar surface (70), a convex surface (72), a planar surface (74), a peripheral internal wall of the cylinder and the cylinder head (12), the said bottom of the concave bowl being rounded with a first rounded surface (58) that is concave in the arc of a circle (R1) and with a second rounded surface (60) that is concave in the arc of a circle (R2), the said first concave rounded surface (58) being connected to the bottom of an inclined flank (54), the said second concave rounded surface (60) being connected by one of its ends to the bottom end of the first rounded surface (58) at a first point (M) and by the other of its ends to the substantially vertical lateral wall (62) at a second point (N),
**characterized in that** the said substantially vertical lateral wall (62) continues into the said rounded surface (66) that is convex in the arc of a circle (R3) ending at the same inclined plane (68) connected to the said concave surface of inflection (69) connected to the said substantially planar surface (70),
and **in that** the said substantially planar surface (70) continues into the said surface (72) that is external convex in the arc of a circle (R5) and reaches the said planar surface (74),
and **in that** the said planar surface (74) extends as far as the vicinity of the wall of the said cylinder (10).

10. Injection method according to Claim 9, **characterized in that** it consists in injecting the fuel with an at least 10% difference in quantity between the two layers (36, 38).
